# EUROPÄISCHE PATENTSCHRIFT

(11) **EP 1 571 591 B1**
(45) Veröffentlichungstag und Bekanntmachung des Hinweises auf die Patenterteilung: **27.09.2017**
(21) Anmeldenummer: 04101391.3
(22) Anmeldetag: 02.04.2004
(51) Int. Cl.: G06F 17/30, G06K 19/07, H04M 1/727

(54) **Verwendung eines RFID-Tags um mit einem Mobilgerät auf eine Hypertext-Seite zuzugreifen**
Use of a RFID tag to access a hypertext page with a mobile device
Utilisation d'étiquettes RFID pour accéder à une page hypertexte depuis un appareil mobile

(30) Priorität: 03.03.2004 EP 04100864; 16.03.2004 EP 04101080
(43) Veröffentlichungstag der Anmeldung: 07.09.2005
(73) Patentinhaber: Swisscom AG, 3050 Bern (CH)
(72) Erfinder: Lauper, Eric, 3014 Bern (CH)
(74) Vertreter: P&TS SA (AG, Ltd.)

(56) Entgegenhaltungen:
- EP-A- 1 054 335
- EP-A- 1 244 043
- EP-A- 1 376 457
- WO-A-03/019926
- WO-A-03/091924
- WO-A-03/107146
- US-A1- 2002 170 952
- US-A1- 2002 174 336
- US-A1- 2003 120 745
- US-A1- 2004 002 305
- BORCHERDING M: "MOBILE SECURITY - AN OVERVIEW OF GSM, SAT AND WAP", LECTURE NOTES IN COMPUTER SCIENCE, 30 November 1999 (1999-11-30), pages 133-139, XP002951479,

## Beschreibung

Die vorliegende Erfindung betrifft ein Verfahren, mit welchem einem Benutzer Informationen und Dienstleistungen zur Verfügung gestellt werden.

Es sind bereits Verfahren bekannt, um anhand eines sogenannten RFID-Elements (oder RFID-Tags) Informationen über ein Produkt zu bekommen. Dabei verfügen manche RFID-Tags über einen Speicherbereich, der kontaktlos mit einem RFID-Lesegerät gelesen werden kann, und in welchem die gewünschte Information eingespeichert wird. Da der Preis der RFID-Tags stark von der Grösse des Speichers abhängig ist, werden solche RFID-Tags vor allem eingesetzt, wenn nur wenig Information benötigt wird; beispielsweise das Produktherstellungsdatum, eine Seriennummer, usw.

Es sind auch andere Verfahren bekannt, in welchen die gewünschte Information aus einer externen Datenbank abgeholt wird, in welcher mehrere RFID-Tags betreffende Informationen abgelegt werden. In diesem Fall wird ein Code im RFID-Tag gelesen und als Recherchenkriterium in der externen Datenbank verwendet, aus welcher die gewünschte Information abgeholt wird. Dabei ist die Verknüpfung zwischen einem Produkt und dem Datensatz in der Datenbank statisch und permanent; ein mit einem RFID-Tag markiertes Produkt ergibt stets Zugriff auf die gleiche Information.

Es wird erwartet, dass die Preise für RFID-Tags weiter sinken werden und dass somit immer mehr Objekte mit RFID-Tags markiert werden, die von immer weiter verbreiteten RFID-Geräten gelesen werden, um Informationen über die markierten Produkte zu bekommen. Solche RFID-Tags werden unter anderem verwendet, um die Verfolgbarkeit, Garantie, und Haltbarkeit von Produkten zu überwachen, um echte Produkte von Nachahmungen zu unterscheiden, und um logistische- und Lagerungskosten beim Hersteller, im Geschäft und beim Endverbraucher zu senken.

Solche Systeme verursachen jedoch verschiedene Sicherheits-, Vertraulichkeits- und Datenschutzprobleme, die im Rahmen der Erfindung festgestellt wurden:
▪ RFID-Komponenten, die mit Produkten verbunden werden, können von jedem sich in der Nähe befindlichen RFID-Lesegerät gelesen werden. Dabei kann ein unbefugter Nachbar mit einem passenden Lesegerät zu Informationen über ein Produkt kommen, die nicht für ihn bestimmt sind und die vertrauliche Angaben über den Inhaber des RFID-Tags beinhalten können.
▪ Die Datenübertragung zwischen dem RFID-Tag und dem RFID-Lesegerät ist nicht verschlüsselt, und kann somit von einem unbefugten Dritten ("Eavesdropper") abgehört werden.
▪ Werden Daten aus einem RFID-Tag an einen Fernserver gesendet, können entsprechende Informationen gesammelt werden, um das Profil des Benutzers statistisch zu ermitteln. Dabei können beispielsweise Informationen aus RFID-Tags von mehreren Produktherstellern in einer gemeinsamen Plattform gesammelt und bewertet werden. Dies ist vor allem dann unerwünscht, wenn die Daten aus dem RFID-Tag mit der Identität des RFID-Tag-Inhabers oder RFID-Tag-Lesers verknüpft werden können. Dies verstösst ausserdem gegen Datenschutzgesetze mancher Länder.
▪ Die Datenübertragung zwischen dem RFID-Lesegerät und dem Fernserver, aus welchem die gewünschten Informationen über das mit dem RFID markierten Produkt abgeholt werden, ist nicht verschlüsselt und kann somit von Dritten abgehört werden.
▪ Der Zugriff auf die Information im Fernserver ist jedem gegeben, der den passenden Code oder die passende Adresse kennt. Unerlaubte Zugriffe können stattfinden, indem unterschiedliche Codes oder Adressen nacheinander versucht werden, um zu Informationen über Produkte von Dritten zu gelangen und diese sogar abzuändern.
▪ In jeder Vermittlungsstelle oder jedem Server auf dem Weg zwischen dem RFID-Leser und dem Fernserver können die Inhalte der Informationsbestellungsmeldungen der RFID-Inhaber bewertet und gesammelt werden, um dabei zu einem Benutzerprofil zu gelangen.
▪ Ein Benutzer kann bestreiten, dass er den Inhalt eines bestimmten RFIDs gelesen hat, oder dass er mehr Informationen aus einem Fernserver abgeholt hat. Dies ist beispielsweise dann problematisch, wenn der Zugriff auf diese Information verrechnet wird.
▪ Umgekehrt kann der Betreiber eines Fernservers bestreiten, dass er einen bestimmten Inhalt einem bestimmten Benutzer zur Verfügung gestellt hat.
▪ RFID-Tags können jederzeit gelesen werden, ohne dass der Inhaber sie (temporär oder endgültig) nach Gebrauch sperren kann.
▪ Die Zeit, zu welcher ein RFID-Tag gelesen wurde, oder zu welcher ein Benutzer Zugriff auf die entsprechende Information erlangt hat, kann bestritten werden.
▪ usw.

US2004/002305A1 beschreibt ein System, in dem RFID-Tags mit einem Mobiltelefon ausgelesen werden, die Informationen zur ihrer gegenwärtigen Ort (Taxi, Restaurant, Haushalt, etc.) enthalten.

Der Artikel Borcherding, M. "Mobile Security - An overview of GSM, SAT and WAP", lecture notes in Computer science, 30.11, 1999, (30.11.1999), S. 133- 139, XP002951479 gibt einen Überblick über die Funktionen eines SIM Application Toolkit.

Durch die Erfindung soll ein Verfahren und ein System angegeben werden, mit welchem einem Benutzer Informationen und Dienstleistungen über ein Produkt auf sichere Weise zur Verfügung gestellt werden.

Dieses Ziel wird durch ein Verfahren mit den Verfahrensschritten des Anspruchs 1 erreicht.

Dies hat unter anderem den Vorteil, dass eine vielen Benutzern ohnehin zur Verfügung stehende Identifizierungskarte eines Mobilgeräts zur Sicherung der Datenübertragung mit einem RFID-Tag und mit einem Fernserver eingesetzt wird.

Dies hat auch den Vorteil, dass einem Benutzer (der sowohl das RFID-Tag und die entsprechende Identifizierungskarte vorweisen kann) der Zugriff auf die gewünschte Information auf sichere Weise gewährleistet wird.

Dies hat unter anderem auch den Vorteil, dass die gewünschte Information oder Dienstleistung über eine editierbare elektronische Hypertext-Seite bereitgestellt wird, deren Inhalt, Adresse und Zugriffsrechte jederzeit geändert werden können.

Die Adresse der Seite entspricht dem im RFID-Tag gelesenen Code. Die Verknüpfung zwischen dem Code und der elektronische Adresse der Seite ist nicht statisch, sondern wird in einem Namen-Dienstserver registriert. Dies hat den Vorteil, dass Änderungen der Seitenadresse jederzeit möglich und leicht verfolgbar sind. Dies hat auch den Vorteil, dass es sich um ein universelles System handelt, in welchem Informationen aus jedem Mobilgerät in jedem Netz über eine einzige Adresse des Servers bestellt werden können.

In einer bevorzugten Ausführungsform wird die Bestellungsmeldung, die an den Fernserver gesendet wird, im Telekommunikationsnetz anonymisiert, indem die Identität des Benutzers des RFID-Lesegeräts durch ein Alias ersetzt wird. Dies hat den Vorteil, dass der Betreiber des Servers, in welchem die gewünschte Information abgelegt wurde, die Identität der Benutzer des RFID-Tags nicht ermitteln kann.

Die vorliegende Erfindung wird im Folgenden anhand der Figuren näher beschrieben. Es zeigen:
Fig. 1 ein Blockschaltbild eines Systems mit einem Mobilgerät, einem RFID-Lesegerät, einem RFID-Tag und einem Fernserver.
Fig. 2 die Struktur einer Meldung mit einem Code gemäss der Erfindung.

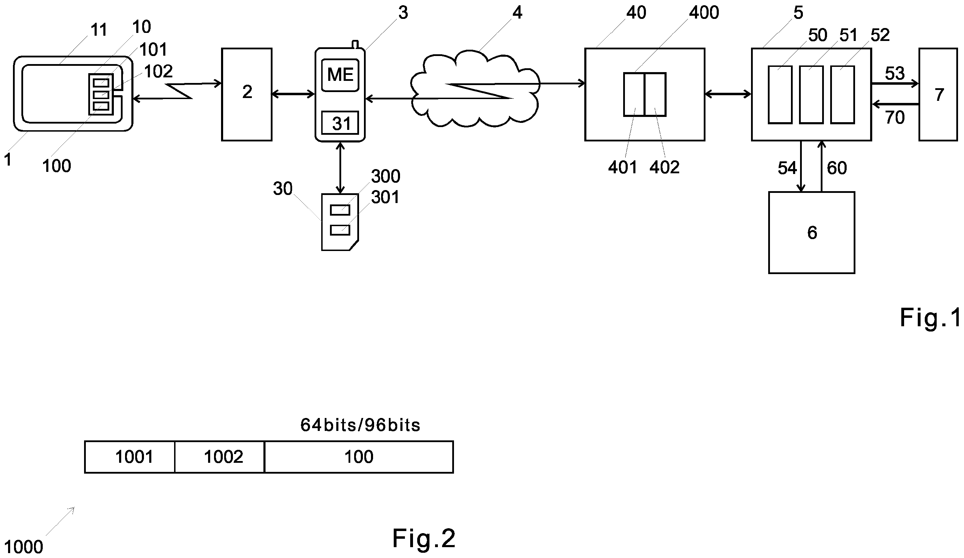

Die Figur 1 zeigt das System, das von einem Benutzer (zum Beispiel einem Mobilteilnehmer) verwendet wird, um mit dem erfindungsgemässen Verfahren Dienstleistungen oder Informationen zu bestellen. Ein Mobilgerät 3 (zum Beispiel ein Mobilfunktelefon oder ein PDA mit einer Schnittstelle für ein zellulares Mobilfunknetz) kann Kurzmeldungen (zum Beispiel SMS und USSD) und Daten (zum Beispiel IP-Pakete) aus einem Mobilfunknetz 4 empfangen und an dieses Netz senden. Das Mobilfunknetz 4 ist beispielsweise ein GSM, GPRS, HSCSD, EDGE, UMTS oder CDMA-Netz, über welches auch Daten übermittelt werden können. Das Mobilgerät 3 enthält eine Identifizierungskarte (zum Beispiel eine SIM-Karte 30), um das Gerät durch das Netz, beziehungsweise am Netz 4, zu identifizieren. Eine oder mehrere Software-Anwendungen 31 können von einem Prozessor im Mobilgerät 3 ausgeführt werden. Die SIM-Karte 30 umfasst unter anderem eine Benutzeridentifizierung (zum Beispiel die internationale Mobilteilnehmer Identität (IMSI), den MSISDN, oder eine speziell für das erfindungsgemässe Verfahren eingeschriebene Identität), sowie ein cryptographisches Sicherheitselement, das aus Hardware und/oder Software-Komponenten besteht, beispielsweise aus einer Sicherheitsfunktion oder aus einem Schlüssel. Mit dem cryptographischen Sicherheitselement können Daten verschlüsselt bzw. entschlüsselt, Meldungen signiert, und Signaturen mit einem symmetrischen oder assymetrischen Verfahren geprüft werden. Die SIM-Karte 30 kann ausserdem vorzugsweise eine Funktion (zum Beispiel die Hash-Funktion) eines Wertes rechnen.

Das Mobilgerät 3 umfasst ausserdem einen RFID-Leseteil 2, oder ist mit einem solchen Leseteil verbunden (beispielsweise über eine USB, Firewire, PCCard, Compactflash, proprietäre, usw.-Verbindung, oder über eine Bluetooth oder WLAN-kontaktlose Verbindung). Das Leseteil 2 umfasst einen Mikrokontroller und mindestens eine Antenne oder Spule, um kontaktlos Daten mit RFID-Komponenten (Tags) in einem Produkt 1 in der unmittelbaren Nähe auszutauschen. Die Datenübertragung erfolgt vorzugsweise im Frequenzbereich 13,56MHz, 900MHz und/oder 860-930MHz. Der Leseteil kann vorzugsweise wahlweise in verschiedenen Frequenzbereichen und mit unterschiedlichen RFIDs arbeiten. Die Tragweite beim Lesen der RFIDs beträgt vorzugsweise zwischen 2 und 10 Metern - je nach Orientierung des Leseteils und des RFID-Tags. Die Verbindung erfolgt vorzugsweise im Half-Duplex Modus mit einer ASK Backscatter Modulation. Das RFID-Tag wird vorzugsweise vom Leseteil 2 gespeist und braucht somit keine unabhängige Energiequelle.

Jedes RFID-Tag 10 umfasst mindestens einen Chip und eine Antenne. Jeder Chip enthält einen permanenten Speicherbereich, in welchem während der Herstellung oder während der Personalisierung des RFID-Tags ein Code 100 abgelegt wird. Der Chip 10 enthält vorzugsweise auch cryptographische Mittel 102, mit welchen Daten verschlüsselt bzw. entschlüsselt, Meldungen signiert, oder Signaturen mit einem symmetrischen oder asymmetrischen Verfahren geprüft werden können.

In einer weniger komplexeren Variante umfasst das cryptographische Modul 102 einen Teil, um Zufallsnummern (so genannte "Challenges") zu generieren und zu senden, sowie einen Teil, um eine Antwort auf diese Zufallnummern mit einem vorbekannten oder errechneten Wert zu vergleichen. Der Nachweis eines Lesegeräts, dass es die erwartete Antwort generieren kann, kann als Identifizierung verwendet werden.

Ein wiederbeschreibarer Speicherbereich 101 ist ausserdem vorzugsweise im RFID-Tag 10 vorgesehen, mit welchem der gesperrte oder entsperrte Zustand des RFID-Tags angegeben wird.

Mit den cryptographischen Sicherheitselementen in der SIM-Karte 30 und/ oder im RFID-Tag 10, kann die Datenübertragung zwischen dem RFID-Tag 10 und dem RFID-Lesegerät 2 verschlüsselt werden. Diese beiden Module können ausserdem zur Identifizierung oder Authentifizierung des Benutzers des Lesegeräts 2,3 gegenüber dem RFID-Tag 10 verwendet werden, damit nur berechtigte Benutzer den Code 100 (und gegebenenfalls andere Daten) lesen, oder den Speicherbereich 101 ändern können. Somit wird der Zugriff zur gewünschten Information erst dann gewährt, wenn die vom RFID-Tag 10 erhaltene Identifizierung des Benutzers akzeptiert wurde.

Mit der einfachen Variante des RFID-Tags 10 kann dies beispielsweise erfolgen, indem das RFID-Tag zuerst ein Challenge an die SIM-Karte 30 sendet, aus welcher die cryptographischen Mittel 301 der SIM-Karte 30 eine Antwort errechnen. Die Antwort wird an das RFID-Tag gesendet, welches erst dann Zugriff auf den gewünschten Code (oder den Speicherbereich) gewährt, wenn die erhaltene Antwort richtig ist.

In der sicheren, aber komplexeren Ausführungsform erfolgt dies, indem ein asymmetrisches Schlüsselpaar zur gegenseitigen Authentifizierung des benannten RFID-Tags und der SIM-Karte eingesetzt wird.

Der Benutzer des Lesegeräts 2,3 kann vorzugsweise den Inhalt des RFID-Tags 10 derart ändern, dass der Zugriff auf den Code 100 und möglicherweise auf andere Daten für mindestens gewisse andere Benutzer gesperrt wird, nicht jedoch unbedingt für den Benutzer selbst. Dies kann erfolgen, indem der Benutzer ein neues Schlüsselpaar im RFID-Tag 10 ablegt, oder eine neue Funktion oder neue Funktionsparameter zur Errechnung der Antwort aus einem Challenge. Die Sperrung kann temporär sein und automatisch oder auf Anfrage gelöscht werden. Eine definitive Sperrung (beispielsweise mit einem "Kill"-Befehl) ist im Rahmen der Erfindung auch möglich, womit ein Benutzer jegliche zukünftigen Zugriffe auf den RFID-Tag-Inhalt verhindert. Die temporäre oder permanente Sperrung kann vom Benutzer manuell oder automatisch vom Mobilgerät, von der SIM-Karte 30 oder von einer anderen Entität initiiert werden. Es können auch unterschiedliche Bereiche des RFID-Tag-Speichers unabhängig voneinander gesperrt, gelöscht oder "getötet" werden. Auf diese Weise kann sich ein Benutzer ein RFID-Tag 10, oder Teile eines RFID-Tags, aneignen und Zugriffe von Dritten verhindern oder zumindest regeln.

Der RFID-Tag-Inhalt 100 wird vorzugsweise gelesen, indem das RFID-Lesegerät vorerst eine Leseanfrage an das RFID-Tag 10 sendet. Das RFID-Tag wird während diesem Vorgang vom Lesegerät 2, 3 elektrisch gespeist. Die Leseanfrage kann einen Nummerbereich angeben, der vom RFID-Tag geprüft wird, bevor der gewünschte Code 100 (vorzugsweise verschlüsselt) über die kontaktlose Schnittstelle zwischen dem RFID-Tag und dem Lesegerät 2, 3 hin oder her gesendet wird. Jedes RFID-Tag 10 entscheidet anhand dieses Nummerbereichs, ob er die Anfrage des Lesegeräts beantworten will. Dies erlaubt einem Lesegerät, nur RFID-Tags mit Codes 100 in einem bestimmten Nummerbereich zu lesen. Dies erhöht ausserdem die Vertraulichkeit, da RFID-Tags nur von Lesegeräten 2, 3, beantwortet wird, die den entsprechenden Nummerbereich kennen.

Der gelesene Code identifiziert eindeutig jedes bestimmte RFID-Tag 1; jedes RFID-Tag hat vorzugsweise einen anderen Code 100. Der Code ist vorzugsweise unfälschbar. Ein Code-Herausgeber (beispielsweise ein Netzbetreiber) kann eine Tabelle führen, auf welcher die gültigen, verbrauchten oder verfallenen Codes als solche markiert sind.

Die Codes 100 umfassen vorzugsweise 64, 96 oder mehr Bits und sind hierarchisch organisiert. Die Antwort 1000 des RFID-Tags 10 auf eine Anfrage des Leseteils 2 umfasst vorzugsweise einen Vorsatz 1001, redundante Prüfdaten 1002 und erst dann einen Code 100 (Fig. 2). Mehrere Codes in einem Produkt in der Nähe des Lesegeräts 2 können auch nacheinander gelesen werden.

Andere Daten können im Speicherbereich des Chips 10 abgelegt und vom Leseteil 2 gelesen werden.

Der Chip 10 ist vorzugsweise ein Nur-Lese-Chip, der günstig und in kleiner Grösse hergestellt werden kann. Wiederbeschreibare Chips können aber im Rahmen der Erfindung auch eingesetzt werden.

Codes 100 werden vorzugsweise von einer gemeinsamen Autorität an verschiedene Produkthersteller, Mobilfunknetzanbieter und Mehrwertdienstanbieter verteilt; ein Teil des Codes gibt vorzugsweise die Identität des Anbieters des Produktes 1 an. Der Produktanbieter reserviert eine Reihe von Codes bei der gemeinsamen Autorität und speichert einen Teil dieser Codes in RFID-Tags 10, die dann mit den Produkten vertrieben werden. Ein Produkt kann von mehreren Organisationen mit unterschiedlichen RFID-Tags versehen werden.

Mindestens eine Anwendung 31 ist im Mobilgerät 3 vorgesehen, um Codes 100 in benachbarten RFID-Tags über das Leseteil 2 zu lesen und um zu entscheiden, welche verwendet werden sollen, um weitere Informationen oder Dienste zu bestellen, wie später erläutert.

Das Lesen eines Codes wird vorzugsweise vom Mobilgerät 3 initiiert; möglich ist beispielsweise, dass das Mobilgerät stets oder periodisch nach benachbarten RFID-Tags sucht und Codes in gefundenen RFID-Tags liest und bearbeitet oder weiterleitet. In einer anderen, stromsparenden Variante wird das Lesen vom Benutzer des Mobilgeräts 3 initiiert, der eine entsprechende Anwendung 31 startet oder einen Befehl eingibt, wenn er ein RFID-Tag lesen will. Das Lesen der RFID-Tags mit dem Mobilgerät 3 oder mit einem anderen Gerät kann auch von einer externen Vorrichtung (zum Beispiel einer Verkaufstelle oder einem Automaten) über eine Schnittstelle im Nahbereich (zum Beispiel Bluetooth oder WLAN) über das Mobilfunknetz 4, oder über einen Link auf einer besuchten WEB oder WAP-Seite initiiert werden.

Einfache Filter und Bearbeitungsmittel können als Teil der Anwendung 31 im Mobilgerät 3 und/oder im Leseteil 2 vorgesehen werden, um den gelesenen Codes 100 gegebenenfalls zu entschlüsseln, ihn auszuwählen und zu bearbeiten. Die Anwendung kann beispielsweise nur gewisse Bereiche von Codes bearbeiten und weiterleiten. Redundanzprüfungen können auch vorgesehen werden, um nicht plausible und fehlerbehaftete Codes zu löschen. Bereits verwendete Codes werden vorzugsweise in einer Datenbank im Mobilgerät 3 zwecks zukünftiger Kontrolle, statistischer Bewertungen und Backups gespeichert.

Je nach Anwendung 31 kann auch ein Passwort oder eine andere Authentifikation verlangt werden, bevor der Code gelesen oder weitergeleitet wird. Das Passwort kann beispielsweise auf einen versteckten, freilegbaren Teil des Produkts 1 gedruckt werden, oder es wird dem Benutzer über einen anderen Kanal mitgeteilt.

In einer Ausführungsform besteht das Passwort aus einem Teil des Codes 100 oder kann mit einer Funktion aus diesem Code ermittelt werden. Das Passwort kann sich beispielsweise aus einer mit einem öffentlichen Schlüssel prüfbaren Signatur des Codes ergeben. In diesem Fall kann das Passwort aus dem Code nur dann ermittelt werden, wenn ein allfälliger unbefugter Dritter die entsprechende Funktion oder den privaten Signierungsschlüssel kennt. Diese Ausführungsform hat den Vorteil, dass die Anwendung 31 die Gültigkeit des Passwortes alleine anhand des Codes prüfen kann.

In einer anderen Variante wird die Gültigkeit des Passworts anhand einer Tabelle in der SIM-Karte 30, im Mobilgerät 3 oder in einem fremden Server geprüft.

In noch einer weiteren Variante wird das richtige Passwort mit dem Mobilgerät eingegeben, dem RFID-Tag 10 über die kontaktlose Schnittstelle übertragen und im RFID-Tag 10 geprüft. Diese Variante erfordert jedoch komplexere RFID-Tags, die über Datenverarbeitungsmittel verfügen, um Passwörter speichern, empfangen und vergleichen zu können.

Der im RFID-Tag 10 gelesene und vom Mobilgerät 2,3 ausgewählte Code wird von der Anwendung 31 in einer Bestellmeldung (zum Beispiel in einer Kurzmeldung oder vorzugsweise in einem GPRS- oder UMTS-Paket) verpackt und über das Mobilfunknetz 4 an einen Server 5 an eine bekannte Adresse gesendet, vorzugsweise einen Server innerhalb der Infrastruktur 40 des Mobilfunknetzes 4 (Figur 1). Die Bestellmeldung wird optional vom Mobilgerät 3 oder vorzugsweise vom cryptographischen Sicherheitselement 301 in der SIM-Karte 30 signiert, verschlüsselt und/oder mit einem Zeitstempel versehen, um die Datenübertragung zwischen SIM-Karte 30 und Server 5 oder 7 zu sichern.

Der Server 5 verwaltet Bestellmeldungen mit Codes, die von mehreren oder möglicherweise allen RFID-Lesern 2,3 empfangen werden. Andere, komplexere Filter können im Server 5 vorgesehen werden, um Codes aus unterschiedlichen Bereichen verschieden oder gar nicht zu behandeln.

Ein Passwort kann auch vom Server 5 verlangt werden, damit der empfangene Code oder das Set von Codes überhaupt behandelt wird; dieses Passwort kann ähnlich wie im Mobilgerät aus dem Code selbst abgeleitet oder anhand einer Tabelle geprüft werden. Das Passwort wird beispielsweise zusammen mit dem Code 100, 101 in einer Meldung an den Server 5 übertragen, oder separat im Rahmen eines Dialogs.

Die Bestellmeldung wird vorzugsweise über einen Anonymiser 40 übertragen, der die Identität des Benutzers des Lesegeräts 2, 3 mit einem temporären oder vorzugsweise permanenten Alias ersetzt. Die Verknüpfung zwischen jeder Identität 400 und dem entsprechenden Alias 401 wird vorzugsweise in einer Tabelle 402 gespeichert, damit die Antwort des Servers 5 oder 7 an den Benutzer geleitet werden kann. In einer Variante ergibt sich das Alias aus einer dem Anonymisierungsgerät bekannten Funktion der Benutzer-Identität, beispielsweise eine Hash-Funktion der Benutzer-IMSI oder MSISDN. Die Bestellmeldung ist somit gegenüber weiteren Servern 5, 7 anonym, bleibt aber lesbar und kann beantwortet werden. Dies hat den Vorteil, dass keine Datenschutzregelbrüche begangen werden durch den blossen Empfang oder durch die statistische Bewertung von Benutzer-Bestellmeldungen. Der Server 5 beziehungsweise 7 kann die empfangenen Bestellmeldungen somit statistisch bewerten, jedoch nur anonyme Benutzerprofile ermitteln.

In der mit der Figur 1 illustrierten Ausführungsform befindet sich der Anonymiser 40 am Netz 4. Er kann vom Betreiber des Mobilfunknetzes 4 oder von einer Drittinstanz betrieben werden, so dass dem Betreiber des Servers 5 und/oder 7 die Identität des Benutzers 1 verborgen bleibt. In einer Variante wird der Anonymiser vom Betreiber des Servers 5 betrieben; in diesem Fall wird die Identität des Benutzers des Lesegeräts 2, 3 nur gegenüber weiteren Servern 6, 7 verborgen.

Der Server 5 kann auch die Identität oder das aus dieser Identität ermittelte Alias des Benutzers des Mobilgeräts 3 mit einem Authentifikationsteil 52 prüfen. Dies ist umso zuverlässiger, wenn der Server 5 vom Betreiber des Mobilfunknetzes 5 verwaltet wird. In diesem Fall kann die Identität des Benutzers beispielsweise anhand der IMSI (International Mobile Subscriber Identity) oder einer anderen Mobilteilnehmer-Identität in der SIM-Karte zuverlässig ermittelt werden. End-zu-End BenutzerIdentifizierung und/oder Authentifizierung anhand eines Schlüsselpaars und eines asymmetrischen Signierungsverfahrens kann im Rahmen der Erfindung auch eingesetzt werden, wobei die verwendete Signatur oder das Zertifikat auch anonym gehalten werden können. Möglich ist auch, die Benutzersignatur im Anonymiser 40 zu prüfen und durch ein Alias oder durch eine andere ad-hoc Signatur zu ersetzen.

Zugriff auf gewisse Informationen und Dienstleistungen werden nur gewissen Benutzern zur Verfügung gestellt (beispielsweise Mobilteilnehmern, die über ein entsprechendes Abonnement verfügen, die einen genügenden Saldo auf einem Geldkonto aufweisen, die sich an einem vorbestimmten Standort oder Gebiet befinden, oder deren Profil die Bereitstellung der gewünschten Information erlaubt), wobei das Abonment oder das Profil im Namen des Alias geführt werden kann.

Falls das Passwort falsch ist, wenn der authentifizierte Benutzer nicht autorisiert ist, oder wenn die gewünschte Information oder Dienstleistung aus einem anderen Grund nicht bereitgestellt werden kann, wird vorzugsweise eine Meldung an den Benutzer geschickt (beispielsweise über SMS, USSD, oder Internet). Nach mehreren Fehlversuchen können aus Sicherheitsgründen weitere Versuche definitiv oder temporär gesperrt werden. Auf diese Weise kann verhindert werden, dass gültige Codes durch mehrmalige Versuche erraten werden.

Der Server 5 umfasst vorzugsweise ein VPN-Teil (Virtual Private Network) 50, mit welchem Datenübertragungen über einen sogenannten virtuellen privaten Tunnel zwischen der SIM-Karte 30 und dem Server 5, oder zumindest zwischen dem Mobilgerät 3 und dem Server 5, erfolgen können. Möglich ist auch, das VPN-Teil im Anonymiser vorzusehen; in diesem Fall kann die Datenübertragung zwischen dem Anonymiser 40 und dem Server durch andere Mittel gesichert werden, beispielsweise indem Daten über eine private Linie übertragen werden.

Der Server 5 umfasst ausserdem vorzugsweise einen HTTPS-Teil 51, mit welchem Bestellmeldungen und gewünschten Informationen gemäss SSL-Protokoll während einer Session verschlüsselt werden.

Der Server 5 ist über Internet oder ein Intranet mit einem Namen-Dienstserver 6 verbunden, in welchem für jeden Code eine entsprechende elektronische Adresse einer elektronischen Hypertext-Seite abgelegt ist.

Eine Anfrage 54 mit dem gerade empfangenen Code 100 wird vom Server 5 an den Namen-Dienstserver 6 geleitet, der mit der entsprechenden elektronischen Adresse 60 antwortet. Die elektronische Adresse besteht beispielsweise aus einem URL oder einer anderen Adresse für ein TCP-IP Netz.

Der Namen-Dienstserver 6 kann vom Betreiber des Servers 5 verwaltet werden und/oder von externen Entitäten (beispielsweise von der Organisation, die die Codes 100 an die verschiedenen Firmen verteilt). Mehrere Namen-Dienstserver können miteinander verbunden werden, so dass die gewünschte Adresse in einem anderen Namen-Dienstserver gesucht wird, wenn sie sich nicht im Server 6 befindet. Dies erlaubt zum Beispiel einem Mobilfunknetzbetreiber, auch Codes von anderen Organisationen zu bearbeiten. Ein lokaler Cache 6 eines externen Namendienstes kann auch im Server 5 oder im Domain des Servers 5 vorgesehen werden; dieser Cache kann beispielsweise nur die Adressen enthalten, die den Codes entsprechen, die sich in Wertkarten des Mobilfunknetzbetreibers befinden.

Der Benutzer des Mobilgeräts 3 kann somit alle Codes 100 von allen Dienstleistungsanbietern stets an den gleichen Zielserver 5, der aus dem Namen-Dienstserver 6 oder dem Netz von Namen-Dienstservern 6 die Adresse der Seite, anhand welcher die gewünschte Information oder Dienstleistung bereitgestellt wird, ermittelt. Die Behandlung der Bestellmeldung ist somit nur vom Code in der Meldung abhängig. Gleiche Meldungen, die an unterschiedliche Server 5 mehrerer Dienstleistungsanbieter gelangen, können somit genau die Bereitstellung der gleichen Dienstleistung oder Information verursachen.

Die Verknüpfung im Namen-Dienstserver 6 zwischen einem Code oder Codeset 100 und einer Adresse kann vorzugsweise vom Anbieter der gewünschten Information jederzeit geändert werden (beispielsweise über ein dediziertes WEB-Formular). Dies erlaubt, die elektronische Adresse einer Seite oder eines Domains zu ändern, ohne die Endbenutzer informieren zu müssen.

Die Adresse der gewünschten Seite kann somit eindeutig allein anhand des im RFID-Tag 1 gespeicherten Codes gefunden werden; die Seite, auf welche zugegriffen wird, ist somit völlig unabhängig von der Adresse oder Telefonnummer des Servers 5. Da viele Produkte 1 markiert werden müssen und da aus Sicherheitsgründen nicht alle Codes verwendet werden können, müssen genügend frei verfügbare Bits für die Codes vorgesehen werden, einfache IP-Nummern zum Beispiel, würden möglicherweise nicht ausreichen, da sehr viele mögliche Kombinationen bereits zugeteilt worden sind. Es wird vorzugsweise ein anderes, selbständiges Seiten-Adressierungssystem verwendet.

Der Server 5 empfängt die Antwort 60 vom Namen-Dienstserver 6 mit der gewünschten Seitenadresse und greift auf die entsprechende Seite im Server 7 zu, oder auf ein Netz mit mehreren lokalen oder fernen Servern (Anfrage 53 und Antwort 70 auf Figur 1).

In einer Variante ergibt sich die Adresse der gewünschten Seite im Server 7 aus einer Kombination der vom Namen-Dienstserver 6 angegebenen Adresse mit einem oder mehreren Bits des Codes 100. In diesem Fall entspricht die Adresse im Namen-Dienstserver 6 einem Bereich, in welchem die individuellen Seiten bestimmten Teilen der Codes entsprechen. Dies hat den Vorteil, dass der Namen-Dienstserver 6 einfacher gestaltet werden kann.

Die Seite im Server 7, auf welche der Server 5 zugreift, umfasst möglicherweise einen Hypertext-Inhalt in einer Markup Sprache. In einer Variante umfasst diese Seite einen XML-Inhalt (eXtended Markup Language). In einer anderen Variante umfasst die Seite einen PML-Inhalt (Product Marking Language). Die Seite kann auch SOAP-Protokol (Simple Object Access Protocol), .NET- Framework oder andere Web-Dienste unterstützen, mit welchen der Server 5 und schlussendlich das Mobilgerät 3 auf Dienste und Objekte des Servers 7 zugreifen kann. In diesem Fall umfasst das erfindungsgemässe Verfahren die Bereitstellung von ausführbaren Programm-Code-Elementen oder SOAP- und/oder .NET-Diensten.

Der Server 5 lädt die gewünschte Seite aus dem Server 7 fern, und/oder greift auf den gewünschten Dienst (oder das Objekt an der angegebenen Adresse) zu, um die gewünschte Dienstleistung oder Information dem Benutzer des Mobilgeräts 1 bereitzustellen. Der Benutzer kann die gewünschte Information beispielsweise mit einem normalen Browser wiedergeben.

Wird der Server 7, im welchem die gewünschte Hypertext-Seite abgelegt ist, von einer anderen Partei betrieben als der Server 5, kann die Datenübertragung bis zum Server 7 gesichert werden. In diesem Fall sind der VPN-Teil, der HTTPS-Server und/oder der Authentisierungsteil möglicherweise im Server 7 angeordnet, wobei der Anonymiser 40 und der Server 5 die Bestellmeldungen und die bestellte Information möglicherweise mindestens teilweise entschlüsseln, um sie weiterleiten und für deren respektive Zwecke bearbeiten zu können.

Das erfindungsgemässe Verfahren hat somit den Vorteil, dass der Zugriff auf die gewünschte Information oder Dienstleistung nur dem Benutzer gewährleistet wird, der den passenden RFID-Tag und die SIM-Karte vorweisen kann. In einer Variante können die Hypertext-Seiten im Server 7 unterschiedlichen Benutzern oder Benutzergruppen für Lese- oder Schreibzugriffe zugänglich gemacht. Möglich ist beispielsweise, dass nur ein Benutzer mit einer bestimmten SIM-Karte eine bestimmte Seite ändern kann, dass aber diese Seite auch für andere Benutzer lesbar bleibt.

## Patentansprüche

1. Verfahren, um einem Benutzer Zugriff auf Informationen über ein Produkt (1) zu geben, mit folgenden Schritten:
das Produkt (1) wird mit mindestens einem Code (100) markiert, der in einem RFID-Tag (10) abgelegt wird,
der benannten Code (100) wird über eine erste kontaktlose Schnittstelle mit einem RFID-Lesegerät (2, 3), welches in einem Mobilgerät (3) integriert ist oder mit einem Mobilgerät (3) verbunden ist, gelesen, wobei das benannte Mobilgerät (3) eine Identifizierungskarte (30) zur Identifizierung des Benutzers umfasst und die Identifizierungskarte (30) ein kryptographisches Sicherheitselement (301) aufweist,
das benannte Mobilgerät (3) sendet den benannten Code über ein Mobilfunknetz (4) an einen Namen-Dienstserver (6),
der benannte Namen-Dienstserver (6) antwortet mit der Adresse einer oder mehrerer Hypertext-Seite(n),
es wird anhand der einen oder mehreren benannten Hypertext-Seite(n) auf die gewünschte Information (7) zugegriffen,
**dadurch gekennzeichnet,**
**dass** der Zugriff auf die gewünschte Information anhand der benannten Identifizierungskarte (30) gesichert wird,
**dass** das benannte kryptographische Sicherheitselement (301) zur Identifizierung des Benutzers gegenüber dem RFID-Tag (30) eingesetzt wird, und
**dass** die folgenden Schritte durchgeführt werden:
das benannte RFID-Tag (10) sendet ein Challenge an die benannte Identifizierungskarte (30),
das kryptographischen Sicherheitselement (301) errechnet eine Antwort aus diesem Challenge und sendet die benannte Antwort an den benannten RFID-Tag (10), und
der benannte RFID-Tag (10) gewährt erst dann Zugriff auf den Code (100), wenn die erhaltene Antwort richtig ist.

2. Das Verfahren des Anspruchs 1, in welchem das kryptographische Sicherheitselement (301) in der benannten Identifizierungskarte (30) zur Verschlüsselung der Datenübertragung zwischen dem RFID-Tag (10) und dem RFID-Lesegerät (2) eingesetzt wird.

3. Das Verfahren eines der Ansprüche 1 oder 2, in welchem das kryptographische Sicherheitselement (301) in der benannten Identifizierungskarte (30) zur Verschlüsselung der Datenübertragung zwischen dem Mobilgerät (3) und der genannten Hypertext-Seite eingesetzt wird.

4. Das Verfahren eines der Ansprüche 2 bis 3, wobei Zugriff auf die benannten Hypertext-Seiten erst dann gewährt wird, wenn der Benutzer vom benannten RFID-Tag (10) und/oder vom benannten Server (5, 7) authentifiziert und autorisiert wurde.

5. Das Verfahren nach einem der Ansprüche 1 bis 4, in welchem ein asymmetrisches Schlüsselpaar zur gegenseitigen Authentifizierung des benannten RFID-Tags (10) und der benannten Identifizierungskarte (30) eingesetzt wird.

6. Das Verfahren eines der Ansprüche 1 bis 5, mit einem Schritt während welchem der benannte Benutzer das benannte RFID-Tags (10) derart ändert, dass der Zugriff auf den benannten Code (100) für mindestens gewisse andere Benutzer gesperrt wird, nicht jedoch für den benannten Benutzer.

7. Das Verfahren eines der Ansprüche 1 bis 6, mit einem Schritt während welchem der benannte Benutzer das benannte RFID-Tag (10) derart ändert, dass der Zugriff auf den benannten Code (100) temporär gesperrt wird.

8. Das Verfahren eines der Ansprüche 1 bis 7, mit einem Schritt während welchem der benannte Benutzer das benannte RFID-Tag (10) derart ändert, dass der Zugriff auf den benannten Code (100) endgültig gesperrt wird.

9. Das Verfahren eines der Ansprüche 1 bis 8, mit einem Schritt während welchem Zugriff auf mindestens einen Teil der benannten Hypertext-Seite auf Initiative des benannten Benutzers hin für mindestens gewisse andere Benutzer gesperrt wird, nicht jedoch für den benannten Benutzer.

10. Das Verfahren eines der Ansprüche 1 bis 9, bei welchem die benannte Identifizierungskarte (30) und das benannte RFID-Tag (10) beide vorgewiesen werden, um Zugriff auf die benannte gewünschte Information zu erhalten.

11. Das Verfahren eines der Ansprüche 1 bis 10, bei welchem das benannte RFID-Lesegerät vorerst eine Leseanfrage an das benannte RFID-Tag (10) sendet,
bei welchem die benannte Leseanfrage einen Nummerbereich angibt,
und bei welchem das benannte RFID-Tag (10) den benannten Nummerbereich prüft, bevor der benannte Code (100) über die benannte erste kontaktlose Schnittstelle gesendet wird.

12. Das Verfahren eines der Ansprüche 1 bis 11, bei welchem ein virtuelles privates Netz zwischen dem benannten Mobilgerät und dem Server, in welchem die benannte Hypertext-Seite abgelegt wird, aufgebaut wird.

13. Das Verfahren eines der Ansprüche 1 bis 12, bei welchem der benannte Benutzer vom Betreiber des benannten Mobilfunknetzes identifiziert wird,
bei welchem die vom Mobilfunknetzbetreiber ermittelte Identität an den Server, an welchen der benannte Code (100) übertragen wird, übermittelt wird,
und bei welchem die benannte gewünschte Information (100) erst dann zur Verfügung gestellt wird, wenn die benannte Identität angenommen wird.

14. Das Verfahren eines der Ansprüche 1 bis 13, bei welchem die Identität des benannten Benutzers zwischen dem benannten Mobilgerät (3) und dem Server (5, 7), an welchen der benannte Code (100) übertragen wird, durch einen Alias ersetzt wird.

15. Das Verfahren eines der Ansprüche 1 bis 14, bei welchem das benannte Mobilgerät (2, 3) den benannten Code (100) mit einem Zeitstempel versieht.

## Claims

1. Method for giving a user access to information about a product (1) with the following steps:
the product (1) is marked with at least one code (100) which is stored in an RFID tag (10),
the at least code (100) is read over a first contactless interface with a RFID reader (2, 3) which is integrated in a mobile device (3) or is connected with a mobile device (3),
wherein said mobile device (3) comprises an identification card (30) for identification of the user, and the identification card (30) comprises a cryptographic security element (301),
the mobile device (3) sends said code over a mobile radio network (4) to a name service server (6),
the name service server (6) replies with the address of one or more hypertext page(s),
the desired information (7) is accessed with the one or more hypertext page(s),
**characterized in**
**that** the access on the desired information is secured on the basis of said identification card,
**that** the cryptographic security element (301) is used for identifying the user with respect to the RFID tag (30), and
**that** the following steps are performed:
the RFID tag (10) sends a challenge to the identification card (30),
the cryptographic security element (301) calculates a response to the RFID tag (10), and
the RFID tag (10) grants the access to the code (100) only, if the received reply is correct.

2. The method according to claim 1, wherein the cryptographic security element (301) is used in the identification card (30) for encrypting the data transmission between the RFID tag (10) and the RFID reader (2).

3. The method according to claim 1 or 2, wherein the cryptographic security element (301) is used in said identification card (30) for encrypting the data transmission between the mobile device (3) and said hypertext page.

4. The method according to one of claims 2 to 3, wherein the access to the hypertext page is granted only, if the user of the RFID tag (10) und/or of the server (5, 7) was authenticated or authorized.

5. The method according to one of claims 1 to 4, wherein an asymmetric key pair is used for mutual authentication of the RFID tag (10) and the identification card (30).

6. The method according to one of claims 1 to 5, with a step during which the user changes the RFID tag (10) such that the access to the code (100) is blocked for at least some other users, however not for said user.

7. The method according to one of claims 1 to 6, with a step during which the user changes the RFID tag (10) such that the access to the code (100) is blocked temporarily.

8. The method according to one of claims 1 to 7, with a step during which the user changes the RFID tag (10) such that the access to the code (100) is blocked definitely.

9. The method according to one of claims 1 to 8, with a step during which access to at least a part of the hypertext page is blocked on the initiative of said user for at least some other users, however not for said user.

10. The method according to one of claims 1 to 9, wherein said identification card (30) and said RFID tag (10) are shown for receiving access to said desired information.

11. The method according to one of claims 1 to 10, wherein the RFID reader sends first a reading request to the RFID tag (10),
wherein the reading request give a number range,
and wherein the RFID tag (10) checks the number range before the code (100) is sent over said first contactless interface.

12. The method according to one of claims 1 to 11, wherein a virtual private net is established between the mobile device and the server, in which said hypertext page is stored.

13. The method according to one of claims 1 to 11, wherein the user of the mobile radio network is identified by the provider,
wherein the identity which is determined by the mobile radio network provider is sent to the server to which the code (100) is transmitted,
and wherein the desired information (100) is made available only then, when said identity is accepted.

14. The method according to one of claims 1 to 13, wherein the identity of the user is replaced by an alias between the mobile device (3) and the server (5, 7) to which the code (100) is transmitted.

15. The method according to one of claims 1 to 14, wherein said mobile device (2, 3) provides the code (100) with a time stamp.

## Revendications

1. Procédé pour accorder à un utilisateur l'accès à des informations sur un produit (1), comprenant les étapes suivantes :
le produit (1) est marqué avec au moins un code (100) qui est stocké dans une étiquette RFID (10),
ledit code (100) est lu au travers d'une première interface sans contact avec un lecteur de RFID intégré dans un dispositif mobile (9) ou qui est relié à un tel appareil mobile (3),
ledit dispositif mobile (3) comprenant une carte d'identification (30) pour identifier l'utilisateur et la carte d'identification (30) possédant un élément de sécurité cryptographique (301),
ledit dispositif mobile (3) envoie ledit code par le biais d'un réseau de télécommunication mobile (4) à un serveur de services de noms (6),
ledit serveur de services de noms (6) répond avec l'adresse d'une ou plusieurs pages hypertextes,
sur la base desdites pages hypertextes, un accès à l'information souhaitée (7) est obtenu,
**caractérisé en ce que**
l'accès à l'information souhaitée est assuré sur la base de ladite carte d'identification (30),
**en ce que** ledit élément de sécurité cryptographique (301) est utilisé pour identifier l'utilisateur en relation à la carte d'identification (30), et
**en ce que** les étapes suivantes sont exécutées :
ladite étiquette RFID (10) envoie un message d'essai à ladite carte d'identification (30),
l'élément de sécurité cryptographique (301) calcule une réponse de ce message d'essai et envoie ladite réponse à ladite étiquette RFID (10),
ladite étiquette RFID (10) accorde l'accès au code (100) seulement lorsque la réponse reçue est correcte.

2. Procédé selon la revendication 1, dans lequel l'élément de sécurité cryptographique (301) est utilisé dans ladite carte d'identification (30) pour chiffrer le transfert de données entre l'étiquette RFID (10) et le lecteur RFID (2).

3. Procédé selon l'une des revendications 1 ou 2, dans lequel l'élément de sécurité cryptographique (301) est utilisé dans ladite carte d'identification (30) pour chiffrer le transfert de données entre le dispositif mobile (3) et ladite page hypertexte.

4. Procédé selon l'une des revendications 2 à 3, dans lequel l'accès auxdites pages hypertextes est accordé seulement lorsque l'utilisateur est authentifié et autorisé par ladite étiquette RFID (10) et/ou par ledit serveur (5, 7).

5. Procédé selon l'une des revendications 1 à 4, dans lequel une paire de clés asymétriques est utilisée pour l'authentification mutuelle de ladite étiquette RFID (10) et de ladite carte d'identification (30).

6. Procédé selon l'une des revendications 1 à 5, comprenant une étape au cours de laquelle ledit utilisateur modifie ladite étiquette RFID (10) de telle sorte que l'accès audit code (100) est bloqué pour au moins certains autres utilisateurs, mais pas pour ledit utilisateur.

7. Procédé selon l'une des revendications 1 à 6, comprenant une étape au cours de laquelle ledit utilisateur modifie ladite étiquette RFID (10) de telle sorte que l'accès audit code (100) est temporairement bloqué.

8. Procédé selon l'une des revendications 1 à 7, comprenant une étape au cours de laquelle ledit utilisateur modifie ladite étiquette RFID (10) de telle sorte que l'accès audit code (100) est définitivement bloqué.

9. Procédé selon l'une des revendications 1 à 8, comprenant une étape au cours de laquelle l'accès à au moins une partie de ladite page hypertexte est bloquée sur initiative dudit utilisateur pour au moins certains autres utilisateurs, mais pas pour ledit utilisateur.

10. Procédé selon l'une des revendications 1 à 9, dans lequel ladite carte d'identification (30) et ladite étiquette RFID (10) sont présentées les deux pour obtenir l'accès accéder à ladite information souhaitée.

11. Procédé selon l'une des revendications 1 à 10, dans lequel ledit lecteur RFID envoie initialement une requête de lecture à ladite étiquette RFID (10),
dans lequel ladite requête de lecture indique une plage de numéros,
et dans lequel ladite étiquette RFID (10) vérifie ladite plage de numéros avant que ledit code (100) est envoyé au travers de ladite première interface sans contact.

12. Procédé selon l'une des revendications 1 à 11, dans lequel un réseau privé virtuel est établi entre ledit dispositif mobile et le serveur, dans lequel ladite page hypertexte est stockée.

13. Procédé selon l'une des revendications 1 à 12, dans lequel ledit utilisateur est identifié par l'opérateur dudit réseau de télécommunication mobile,
dans lequel l'identité déterminée par l'opérateur de réseau de télécommunication mobile est communiquée au serveur auquel ledit code (100) est transmis,
et dans lequel ladite information souhaitée (100) est mise à disposition seulement si ladite identité est acceptée.

14. Procédé selon l'une des revendications 1 à 13, dans lequel l'identité dudit utilisateur est remplacée par un pseudonyme entre ledit dispositif mobile (3) et le serveur (5, 7) auquel ledit code (100) est transmis.

15. Procédé selon l'une des revendications 1 à 14, dans lequel ledit dispositif mobile (2, 3) munit ledit code (100) d'un horodatage.
